# EUROPEAN PATENT APPLICATION

(11) **EP 4 736 612 A1**
(43) Date of publication of application: **06.05.2026**
(21) Application number: 24924243.9
(22) Date of filing: 25.09.2024
(51) Int. Cl.: A01C 1/06, C09K 17/40, C05G 3/00, C05G 3/50, C05G 3/80

(54) **BIOCHAR SEED GEL FOR VEGETATION RESTORATION IN SALINE-ALKALI LAND, PREPARATION METHOD THEREFOR AND USE THEREOF**

(30) Priority: 05.09.2024 CN 202411244456
(71) Applicant: Beijing Normal University, Beijing 100875 (CN)
(72) Inventor: The designation of the inventor has not yet been filed
(74) Representative: Bayramoglu et al.
(86) International application number: PCT/CN2024/121010
(87) International publication number: WO 2026/051133

(57) **Abstract**

The present invention discloses a biochar-seed gel for vegetation rehabilitation in saline-alkali soil, a preparation method thereof, and an application thereof and belongs to the technical field of vegetation rehabilitation. The biochar-seed gel of the present invention includes a water-retaining hydrogel, effective nutrient components, and a structural maintenance agent, wherein the water-retaining hydrogel is polyacrylamide; the effective nutrient components comprise *Bacillus subtilis* inoculant, brassinolide, chitosan oligosaccharide, polyaspartic acid, and compound fertilizer; and the structural maintenance agent comprises biochar, clay, chitosan, and *Gleditsia sinensis* powder. In the present invention, the biochar-seed gel forms a microenvironment on the soil surface, mitigating stress caused by high-salinity soil conditions. The gel exhibits strong water-retention capacity, effectively maintaining moisture to support seed and seedling growth while alleviating water deficiency resulting from soil compaction.

## Description

### TECHNICAL FIELD

The present invention belongs to the technical field of vegetation rehabilitation and specifically relates to a biochar-seed gel for vegetation rehabilitation in saline-alkali soil, a preparation method thereof, and an application thereof.

### BACKGROUND

Saline-alkali soil refers to a soil containing high concentrations of soluble salts and alkaline substances. Such a soil environment poses a severe threat to agricultural production and ecosystems, resulting in a significant decline in crop yield. In saline-alkali environments, high concentrations of soil salt ions induce soil compaction, consequently causing poor soil structure and fertility degradation; and excessively high soil salinity readily interferes with plant nutrient acquisition and translocation, thereby inducing nutrient imbalance. This leads to reduced vegetation productivity, subsequently triggering degradation of ecological functions in surrounding environments, which poses a severe threat to local ecological security. Vegetation rehabilitation of saline-alkali soils is currently the predominant approach in ecological restoration of such soils.

Large-scale propagation of vegetation seeds and propagules are critical steps in the vegetation rehabilitation of saline-alkali soil. Particularly for the most common annual plants in saline-alkali soil, it is essential to maintain a vegetation scale comparable to that of the previous year. Following vegetation degradation, where there is insufficient seed source availability and a lack of suitable soil conditions to support plant community colonization in the subsequent growing season, active supplementation of seeds and juvenile plants is required. Conventional vegetation rehabilitation methods primarily comprise sowing, plant species selection and breeding, and transplanting. By performing large-scale propagation on the seeds and propagules of plants, the survival rate of plants in saline-alkali soil is effectively enhanced, thereby achieving restoration of the local vegetation community. However, under high-salinity and arid stress conditions in saline-alkali soils, vegetative growth and germination are conventionally severely restricted. Even the colonization and growth of stress-tolerant plants can be affected to some extent, which poses significant challenges to the ecological restoration of saline-alkali soils. Therefore, developing cost-effective ecological restoration technologies adapted to the special stress conditions of saline-alkali lands is a critical technical challenge that urgently needs to be addressed.

The application of seed improvement technologies in agriculture has reached considerable maturity, wherein seed coating technology is a widely adopted measure to enhance seed stress tolerance and survival rates. By treating the seed exterior with coating agents, the germination rate, growth velocity and stress resistance of the seeds are significantly improved. By applying a coating agent to the exterior surface of seeds, the germination rate, growth speed, and stress resistance are enhanced. With the continuous development of ecological restoration, facing issues such as insufficient natural germplasm resources and relatively low germination rates of natural seeds under stressful conditions, seed coating technology has been gradually introduced into the field of vegetation rehabilitation. For the specific stressful environment of saline-alkali soil, improving and optimizing seed coating technology is particularly critical, yet relevant techniques remain lacking. Conventional seed coating technologies are designed for farmland applications, but the effectiveness is limited in saline-alkali soils due to constraints such as high salinity and drought. It is necessary to propose targeted technical solutions to overcome these limitations, with stricter requirements for the coating material's performance, particularly in salt reduction and water retention.

Furthermore, conventional agricultural seed coating technologies conflict with environmentally friendly principles due to their inclusion of bactericides, pesticides, and similar additives. Excessive synthetic organic and inorganic compounds contribute to environmental pollution, exacerbating the degradation of local fragile ecosystems. Accordingly, the present invention is proposed to address the requirements of low cost, pollution-free operation, salt reduction, and drought resistance.

### SUMMARY

An objective of the present invention is to provide a biochar-seed gel for vegetation rehabilitation in saline-alkali soil, a preparation method thereof, and an application thereof, to overcome the high-salinity and drought stress conditions in saline-alkali soil, thereby improving seed germination rates and plant stress resistance.

To achieve the above objective, the present invention provides the following technical solutions.

The present invention provides a biochar-seed gel for vegetation rehabilitation in saline-alkali soil, including the following components: a water-retaining hydrogel, effective nutrient components, and a structural maintenance agent;
the water-retaining hydrogel is polyacrylamide; the effective nutrient components comprise *Bacillus subtilis* inoculant, brassinolide, chitosan oligosaccharide, polyaspartic acid, and compound fertilizer; and the structural maintenance agent comprises biochar, clay, chitosan, and *Gleditsia sinensis* powder.

Preferably, a weight ratio of the water-retaining hydrogel, the effective nutrient components, and the structure-maintaining agent is 1-10:1-5:1-10.

Preferably, a weight ratio of the *Bacillus subtilis* inoculant, brassinolide, chitosan oligosaccharide, polyaspartic acid, and compound fertilizer is 3-5:1-2:5-10:1-2:3-5.

Preferably, a weight ratio of the biochar, clay, chitosan, and *Gleditsia sinensis* powder is 15-30:50-70:5-10:1-3.

Preferably, a bacterial concentration of the *Bacillus subtilis* inoculant is 5×10¹⁰- 1×10¹²cfu/g; the compound fertilizer is a high-phosphorus-potassium fertilizer; the biochar is reed-derived biochar with a particle size of ≥200 mesh; and the clay is in-situ soil from the ecological restoration area, dried at 170-190°C for 20-24 hours, with a particle size of ≥100 mesh.

The present invention further provides a preparation method of the biochar-seed gel, including the following steps:
1) mixing the *Bacillus subtilis* inoculant, brassinolide, chitosan oligosaccharide, polyaspartic acid, and compound fertilizer to obtain the effective nutrient components;
2) mixing the biochar, clay, chitosan, and *Gleditsia sinensis* powder to obtain the structural maintenance agent; and
3) mixing the water-retaining hydrogel, the effective nutrient components, and the structural maintenance agent to obtain the biochar-seed gel.

Preferably, the biochar-seed gel is stored in a sealed environment at 3-5 °C.

The present invention further provides an application of the biochar-seed gel for vegetation rehabilitation in saline-alkali soil.

Preferably, the biochar seed gel is suitable for halophytes with a seed diameter of less than 5 mm, and the halophytes include Suaeda salsa.

Preferably, the application includes the following steps:
(1) mixing seeds after being soaked and pre-germinated with the biochar-seed gel at a mass ratio of 1:3 to 1:5 to obtain a mixture of seeds and gel; and
(2) adding water in an amount of 8 to 12 times the mass of the mixture of seeds and gel obtained in step (1), standing for 20 to 28 hours, and then spraying onto saline-alkali soil.

### Advantageous Effects:

In the biochar-seed gel provided by the present invention, polyacrylamide (PAM) serves as a high-water-absorbency polymer material, which exhibits excellent solubility in water, enables the formation of solutions at varying concentrations, and possesses high water-absorption capacity and viscosity. PAM serves as the primary material of the water-retaining gel, mainly functioning for water retention, thickening and immobilization. By forming a gel, PAM maintains moisture and isolates salts, thereby achieving the objectives of seed water preservation and salt-stress resistance.

The *Bacillus subtilis* inoculant is a microbial preparation wherein *Bacillus subtilis* serves as the primary strain, and provides nutrients and growth-promoting substances to support the strain's life activities, thereby functioning to improve the soil environment; the bacterial strain forms antagonistic relationships with partial harmful microorganisms, lowering the population density of the harmful microorganisms and consequently functioning to resist plant diseases; the gas produced by the metabolic activity of the microbial strains modifies the soil structure to some extent, thereby mitigating compaction in saline-alkali soil and enhancing soil loosening; and the utilization of salts by the microbial strains during vital activities effectively reduces soil salt content, thereby alleviating salt stress.

Brassinolide, as a novel endogenous plant hormone, functions to promote plant growth and alleviate salt stress in plants. Compared with conventional plant growth regulators, brassinolide exhibits higher water solubility, requires lower dosage, and demonstrates reduced biological toxicity.

Chitosan oligosaccharide is a low-molecular-weight oligosaccharide exhibiting excellent water solubility. The chitosan oligosaccharide promotes plant growth, enhances disease resistance, and improves environmental adaptability in plants. Chitosan oligosaccharide improves plant growth rate, reduces disease incidence, and enhances survival capability and yield stability under adverse conditions by regulating endogenous hormones, inducing defense responses, and strengthening stress resistance in plants.

Polyaspartic acid (PASP) functions as a biostimulant to enhance plant growth, primarily by promoting seed germination and root development, improving water use efficiency, and increasing nutrient uptake capacity, thereby stimulating plant growth, enhancing stress resistance, and improving yield stability.

The high-phosphorus-potassium fertilize may provide artificial supplementation of various elements required during the growth and development of plants.

The reed-derived biochar is a carbonaceous material produced by pyrolyzing plant-based raw materials such as reeds at high temperatures, serving to provide carbon sources for microbial inoculants, improve soil structure, increase soil organic matter content, and enhance soil fertility and water retention capacity; the porous structure also alters the physicochemical properties of the soil, and promotes the growth of soil microbial communities by creating a suitable micro-environment that promotes the growth of soil microbial communities; and the porous structure of biochar adsorbs and immobilizes nutrients, reducing nutrient loss and enabling slow release of the nutrients.

The clay is in-situ soil from the ecological restoration area, primarily serving to maintain structural integrity, and is added to increase the weight of the biochar-seed gel. The clay exhibits strong water retention capacity, improves soil permeability and water-holding capacity, and provides certain inorganic substances required for plant growth; meanwhile, the in-situ soil ensures adaptation of the biochar-based seed gel to the practice area, thereby improving seedling survival rates.

Chitosan is a natural polymer material. Chitosan exhibits excellent biocompatibility, biodegradability, and bioactivity, and functions as a thickening agent. Meanwhile, chitosan possesses a certain water-retention capacity, serving as an effective supplement for enhancing water retention performance.

Gleditsia sinensis powder, as a natural surfactant, improves the adhesion of the gel to seed surfaces, thereby enhancing the mechanical properties of the biochar-seed gel.

In the present invention, the biochar-seed gel forms a microenvironment on the soil surface, mitigating stress caused by high-salinity soil conditions. The gel exhibits strong water-retention capacity, effectively maintaining moisture to support seed and seedling growth while alleviating water deficiency resulting from soil compaction. Moreover, the biochar-seed gel primarily comprises raw materials derived from purely natural sources, thereby reducing potential negative environmental effects during its application. Furthermore, the biochar-seed gel has a straightforward preparation procedure, utilizing readily available materials and offering cost-effective production; and the gel is stored in solid form, which facilitates storage and transportation, and can be reconstituted by adding water for spraying onto the surface of the target restoration area, enabling high operational efficiency and large-scale restoration engineering applications.

### BRIEF DESCRIPTION OF THE DRAWINGS

FIG. 1 illustrates a gel-seed sample prepared in Example 2; and
FIG. 2 shows experimental results of seed germination in Example 3.

### DETAILED DESCRIPTION OF THE EMBODIMENTS

The present invention provides a biochar-seed gel for vegetation rehabilitation in saline-alkali soil, including the following components: a water-retaining hydrogel, effective nutrient components, and a structural maintenance agent, wherein the water-retaining hydrogel is polyacrylamide; the effective nutrient components comprise *Bacillus subtilis* inoculant, brassinolide, chitosan oligosaccharide, polyaspartic acid, and compound fertilizer; and the structural maintenance agent comprises biochar, clay, chitosan, and *Gleditsia sinensis* powder.

In the present invention, a weight ratio of the water-retaining hydrogel, the effective nutrient components, and the structure-maintaining agent is 1-10:1-5:1-10, further preferably 10:2.5:7; a weight ratio of the *Bacillus subtilis* inoculant, brassinolide, chitosan oligosaccharide, polyaspartic acid, and compound fertilizer is 3-5:1-2:5-10:1-2:3-5, further preferably 3:1:6:2:3; a weight ratio of the biochar, clay, chitosan, and *Gleditsia sinensis* powder is 15-30:50-70:5-10:1-3, further preferably 20:60:8:2.

In the present invention, a bacterial concentration of the *Bacillus subtilis* inoculant is 5×10¹⁰- 1×10¹² cfu/g, further preferably 1×10¹¹ cfu/g; the compound fertilizer is a high-phosphorus-potassium fertilizer, further preferably a water-soluble compound fertilizer with an N-P-K ratio of 12:33:21; the biochar is reed-derived biochar with a particle size of ≥200 mesh; and the clay is in-situ soil from the ecological restoration area, dried at 170-190°C for 20-24 hours, with a particle size of ≥100 mesh, further preferably dried at 180°C for 24 hours.

The present invention further provides a preparation method of the biochar-seed gel, including the following steps:
1) the *Bacillus subtilis* inoculant, brassinolide, chitosan oligosaccharide, polyaspartic acid, and compound fertilizer are mixed to obtain the effective nutrient components;
2) the biochar, clay, chitosan, and *Gleditsia sinensis* powder are mixed to obtain the structural maintenance agent; and
3) the water-retaining hydrogel, the effective nutrient components, and the structural maintenance agent are mixed to obtain the biochar-seed gel.

In the present invention, the biochar-seed gel is stored in a sealed environment at 3-5 °C, more preferably at 4 °C.

The present invention further provides an application of the biochar-seed gel for vegetation rehabilitation in saline-alkali soil.

Preferably, the biochar seed gel is suitable for halophytes with a seed diameter of less than 5 mm, and the halophytes include Suaeda salsa.

Preferably, the application includes the following steps:
(1) seeds after being soaked and pre-germinated are mixed with the biochar-seed gel at a mass ratio of 1:3 to 1:5 to obtain a mixture of seeds and gel; and
(2) water in an amount of 8 to 12 times the mass of the mixture of seeds and gel from step (1) is added, followed by standing for 20-28 hours, and then the resulting mixture is sprayed onto the saline-alkali soil.

The mass ratio of the seeds to biochar-seed gel is further preferably 1:4, the amount of water added is further preferably 10 times the mass of the mixture of seeds and gel, and the standing time is further preferably 24 hours.

The technical solutions provided by the present invention will be described in detail below with reference to embodiments, which are not to be construed as limiting the scope of protection of the present invention.

### Example 1 Preparation of biochar-seed gel

### (1) Pretreatment of experimental materials

The clay collected from the remediation site was oven-dried at 180°C for 24 hours. After being cooled to 25 °C, the clay was crushed and ground for 15 minutes, followed by sieving to retain the fraction with a particle size of ≥100 mesh;
the reed-derived biochar was pulverized by grinding for 15 minutes, followed by sieving to retain the fraction with a particle size of ≥200 mesh.

### (2) Preparation of effective nutrient components

*Bacillus subtilis* inoculant, brassinolide, chitosan oligosaccharide, polyaspartic acid, and a high phosphorus-potassium compound fertilizer were mixed at a mass ratio of 3:1:6:2:3, followed by stirring for 20 minutes until uniformly mixed, thereby obtaining the effective nutrient components.

### (3) Preparation of a structural maintenance agent

The reed biochar, clay, chitosan, and soapberry fruit powder were mixed at a mass ratio of 10:30:4:1, and stirred in a mixer (with a power of 550 W) for 20 minutes until uniformly mixed, thereby obtaining the structure-maintaining agent.

### (4) Preparation of a biochar-seed gel

The water-retaining hydrogel, effective nutrient components, and the structure-maintaining agent were mixed at a mass ratio of 10:2.5:7 to prepare the biochar-seed gel, which was then stored in a sealed condition at 4 °C for low-temperature preservation.

### Example 2 Mixing of seeds with the biochar-seed gel

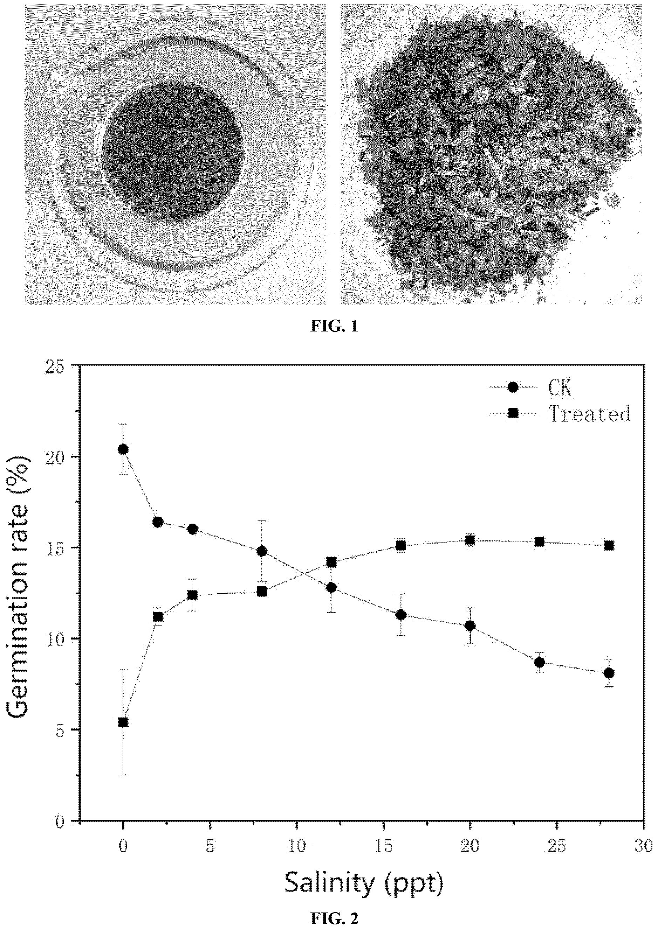

In this example, *Suaeda salsa (L.) Pall.* was selected as the target subject.
1) The collected seeds of *Suaeda salsa (L.) Pall.* were air-dried naturally, winnowed to remove dust and straw debris, sieved, and retained within a mesh size range of 10 to 40.
2) The seeds of *Suaeda salsa (L.) Pal*l. were rinsed with a 0.1% potassium permanganate solution for 3 minutes, followed by three washes with deionized water, and then soaked in distilled water at 25 °C for 24 hours to promote germination.
3) The seeds after soaking and germination treatment were mixed with the biochar-seed gel prepared in Example 1 at a mass ratio of 5:1 to obtain a mixture of seeds and gel, with the mixed state being shown in FIG. 1. In FIG. 1, the left panel shows the mixture of seeds and gel placed in a beaker, while the right panel provides a close-up view of the mixture, where the green particles represent the seeds of *Suaeda salsa (L.) Pall.*

### Example 3 Germination experiments of the seeds under salt stress

Plump seeds of *Suaeda salsa (L.) Pall.* were selected and divided into two treatment groups: a control group comprising seeds that underwent winnowing, sieving, and germination treatment (processed according to step 1) and step 2) in Example 2, without mixing with the biochar-seed gel); and an experimental group comprising *Suaeda salsa* seeds that were mixed with the biochar-seed gel (prepared according to the complete procedure described in Example 2), 9 replicate treatments were established for each group, with 100 seeds (approximately 0.1 g) of *Suaeda salsa* being used per replicate treatment. The experiment was conducted indoors under controlled conditions with a temperature of 20 °C ± 2 °C and uniform illumination throughout the day.

The naturally slightly air-dried soil (collected from the north bank of the Yellow River Delta National Nature Reserve) was filled into 9 cm-diameter nursery pots to form a 6 cm-thick soil layer. In the experimental group, a 10-fold mass of water relative to the seed-gel mixture was added, followed by 24-hour static settlement. The mixture was then homogenized to form a turbid suspension, which was sprayed onto the soil surface using a specialized applicator. In the control group, water was added to match the volume of the experimental group's solution, and then sprayed onto the soil surface.

At 12:00 noon daily, the nine treatment groups were irrigated with 10 mL of saline solutions at different concentrations (0, 2, 4, 8, 12, 16, 20, 24, and 28 ppt, respectively). Germination counts were recorded at 16:00 each day, with seedling emergence considered as successful germination. This cultivation protocol was maintained continuously for 8 days.

As shown in FIG. 2, the experimental results demonstrate that the seed germination rate is decreased with increasing salinity under natural conditions. The biochar-seed gel defies this conventional pattern by demonstrating increased germination rates with rising salinity levels. Under saline conditions exceeding 12ppt, the gel-coated seeds maintain significantly higher germination rates compared to untreated seeds, sustaining superior germination performance. It is demonstrated that the gel enhances seed germination under stressful saline-alkali conditions, including high salinity and drought.

The above descriptions are merely the preferred examples of the present invention. It should be noted that for those of ordinary skill in the art, several improvements and modifications may be made without departing from the principles of the present invention. These improvements and modifications should also be regarded as within the scope of protection of the present invention.

## Claims

1. A biochar-seed gel for vegetation rehabilitation in saline-alkali soil, comprising the following components: a water-retaining hydrogel, effective nutrient components, and a structural maintenance agent;
wherein the water-retaining hydrogel is polyacrylamide;
the effective nutrient components comprise *Bacillus subtilis* inoculant, brassinolide, chitosan oligosaccharide, polyaspartic acid, and compound fertilizer; and
the structural maintenance agent comprises biochar, clay, chitosan, and *Gleditsia sinensis* powder.

2. The biochar-seed gel according to claim 1, wherein a weight ratio of the water-retaining hydrogel, the effective nutrient components, and the structure-maintaining agent is 1-10:1-5:1-10.

3. The biochar-seed gel according to claim 2, wherein a weight ratio of the *Bacillus subtilis* inoculant, brassinolide, chitosan oligosaccharide, polyaspartic acid, and compound fertilizer is 3-5:1-2:5-10:1-2:3-5.

4. The biochar-seed gel according to claim 3, wherein a weight ratio of the biochar, clay, chitosan, and *Gleditsia sinensis* powder is 15-30:50-70:5-10:1-3.

5. The biochar-seed gel according to claim 4, wherein a bacterial concentration of the *Bacillus subtilis* inoculant is 5×10¹⁰-1×10¹²cfu/g;
the compound fertilizer is a high-phosphorus-potassium fertilizer;
the biochar is reed-derived biochar with a particle size of ≥200 mesh; and
the clay is in-situ soil from the ecological restoration area, dried at 170-190 °C for 20-24 hours, with a particle size of ≥100 mesh.

6. A preparation method of the biochar-seed gel according to claims 1-5, comprising the following steps:
1) mixing the *Bacillus subtilis* inoculant, brassinolide, chitosan oligosaccharide, polyaspartic acid, and compound fertilizer to obtain the effective nutrient components;
2) mixing the biochar, clay, chitosan, and *Gleditsia sinensis* powder to obtain the structural maintenance agent; and
3) mixing the water-retaining hydrogel, the effective nutrient components, and the structural maintenance agent to obtain the biochar-seed gel.

7. The preparation method according to claim 6, wherein the biochar-seed gel is stored in a sealed environment at 3-5 °C.

8. An application of the biochar-seed gel according to any one of claims 1-5 or a biochar-seed gel prepared by the preparation method according to any one of claims 6-7 for vegetation rehabilitation in saline-alkali soil.

9. The application according to claim 8, wherein the biochar seed gel is suitable for halophytes with a seed diameter of less than 5 mm.

10. The application according to claim 9, wherein the application comprises the following steps:
(1) mixing seeds after being soaked and pre-germinated with the biochar-seed gel at a mass ratio of 1:3 to 1:5 to obtain a mixture of seeds and gel; and
(2) adding water in an amount of 8 to 12 times the mass of the mixture of seeds and gel obtained in step (1), standing for 20 to 28 hours, and then spraying onto saline-alkali soil.
